# EUROPÄISCHE PATENTSCHRIFT

(11) **EP 1 299 434 B1**
(45) Veröffentlichungstag und Bekanntmachung des Hinweises auf die Patenterteilung: **23.08.2006**
(21) Anmeldenummer: 01943516.3
(22) Anmeldetag: 18.06.2001
(51) Int. Cl.: C08F 212/10, C08F 6/00, B01J 19/24, B01D 3/00, B01D 19/00

(54) **KAUTSCHUKFREIE COPOLYMERISATE MIT NIEDRIGEN MONOMERRESTGEHALTEN UND VERFAHREN UND VORRICHTUNG ZUR IHRER HERSTELLUNG**
COPOLYMERS, DEVOID OF RUBBER, WITH A LOW RESIDUAL MONOMER CONTENT AND A METHOD AND DEVICE FOR PRODUCING THE SAME
COPOLYMERES EXEMPTS DE CAOUTCHOUC, A FAIBLE TENEUR EN MONOMERES RESIDUELS, PROCEDE ET DISPOSITIF DE PRODUCTION CORRESPONDANTS

(30) Priorität: 29.06.2000 DE 10031766
(43) Veröffentlichungstag der Anmeldung: 09.04.2003
(73) Patentinhaber: LANXESS Deutschland GmbH, 51369 Leverkusen (DE)
(72) Erfinder: EITEL, Alfred, A-8222 St. Johann (AT); KOHLGRÜBER, Klemens, 51515 Kürten (DE); WEYRICH, Frank, 42781 Haan (DE); RUDOLPH, Peter, 50374 Erftstadt (DE); THIEM, Hans-Jürgen, 41539 Dormagen (DE); KÖNIG, Michael, 201204 Shanghai (CN); NOTHELLE, Ricarda, 201201 Shanghai (CN); MEYER, Helmut, 51519 Odenthal (DE)
(86) Internationale Anmeldenummer: PCT/EP2001/006837
(87) Internationale Veröffentlichungsnummer: WO 2002/000740

(56) Entgegenhaltungen:
- EP-A- 0 413 830
- EP-A- 0 768 337
- US-A- 2 941 985
- US-A- 4 383 972
- US-A- 4 542 196

## Beschreibung

Die vorliegende Erfindung betrifft kautschukfreie Copolymerisate mit niedrigen Momomerrestgehalten sowie ein Verfahren und eine Vorrichtung zu ihrer Herstellung.

Copolymerisate von ethylenisch ungesättigten Monomeren sind aus einer Vielzahl von Veröffentlichungen bekannt. Dies gilt insbesondere für den Einsatz von ABS-Polymerisaten.

Polymere weisen stets einen Restanteil von Monomeren, aus welchen sie aufgebaut sind, auf. Häufig ist die Entfernung der Restmonomeren aus den Polymerisaten mit einer thermischen Belastung verbunden, was zu einer unerwünschten Intensivierung der Eigenfarbe führt. Zur Verbesserung der Eigenschaften ist es wesentlich, die Restmonomeren in geeigneter Weise zu entfernen. Diese erzeugen nämlich eine unerwünschte Geruchsbelästigung bei der Verwendung. Ferner bestehen gesundheitliche Bedenken, da viele der Stoffe toxisch sind.

Produkte mit niedrigen Restmonomergehalten zeichnen sich nicht nur durch geringe Geruchsbelästigung und niedrige ökologische Relevanz aus, sondern verbessern auch die physikalischen Eigenschaften, wie z.B. die Wärmeformbeständigkeit nach Vicat.

Eine Entfernung von Restmonomeren auf chemischem Weg wird beispielsweise in der EP 0 768 337 A1 beschrieben. Die Entfernung erfolgt durch Zusatz CH-acider organischer Verbindungen. Die chemische Umwandlung von Restmonomeren führt gegebenenfalls zu Produkten mit unerwünschter ökologischer Relevanz, welche den Einsatz der Produkte in der Praxis deutlich erschwert.

Der gleiche Mangel tritt beim Verfahren zur Reduzierung der Restmonomeren mit ungesättigten Fettsäuren gemäß der US-PS 4 215 024 auf.

Ein anderes bekanntes Verfahren beschreibt die Reduzierung von Restmonomeren durch Behandlung der Formmassen mit Elektronenstrahlen. Das Verfahren ist jedoch in großtechnischem Maß viel zu aufwendig (DE 28 43 292 A1). Als ebenso aufwendig erweist sich ein durch die EP 0 798 314 A1 vorbeschriebenes Verfahren zur Entfernung von Restmonomeren durch Injektion von superkritischen Lösungsmitteln in die Polymerschmelze.

Übliche Verfahren basieren auf der Entfernung von Restmonomeren mittels mechanisch unterstützten Systemen. Beispielsweise werden Extruder (US-PS 4 423 960), Entgasungszentrifugen (US-PS 4 940 472) oder Dünnschichtverdampfer (DE 19 25 063 A1) verwendet.

Alle genannten Verfahren weisen den Nachteil auf, dass schwere bewegte Teile in den Geräten verwendet werden, was zu kostenintensiven, störungs- und verschleißanfälligen Prozessen führt.

Eine andere weitverbreitete Technik besteht darin, das Material vorzuerhitzen und dann durch Entspannung (Flashen) von Restmonomeren zu befreien. Dieses Verfahren kann ein oder mehrstufig durchgeführt werden (DE 24 00 661 A1). Das Flashen führt jedoch zwangsläufig zu Temperaturspitzen, was zu einer Schädigung des Materials führt.

Um diesen Mangel zu beheben, wurden Verfahren vorgeschlagen, die Schleppmittel, wie beispielsweise Wasser als zusätzliche Komponente einführen (Vakuum in Forschung und Praxis 1998, Nr. 4 285-293). Dabei kommt es darauf an, das Schleppmittel optimal in die hochviskose Schmelze einzudispergieren, um den Prozess erfolgreich betreiben zu können. Um das zu erreichen, sind spezielle, konstruktiv aufwendige Mischer nötig. Keine Zugabe von Wasser ist nötig, wenn das Polymer bereits in wässriger Phase hergestellt wird. Durch Anlegen von Vakuum und Entgasen im Vakuum gelingt es, niedrige Restmonomergehalte zu erzielen. Es zeigt sich jedoch, dass Verweilzeiten bis zu einer Stunde nötig sind, um sehr niedrige Restmonomergehalte zu erzielen (DE-OS 25 47 140). Derart lange Temperaturbelastungen führen zu einer nicht zulässigen Farbvertiefung des Materials.

Ein gattungsgemäßes Verfahren und eine Vorrichtung zur Herstellung und Eindampfung von styrolischen/Alkenylnitril-Copolymeren ist aus der DE 33 34 338 A1 bekannt. Dort erfolgt eine kontinuierliche Massenpolymerisation styrolischer und Alkenylnitrilmonomeren in einem Zwei-Stufen-Verfahren, bei welchem in einer ersten Stufe das Verhältnis von styrolischem zu Alkenylnitrilmonomer eingestellt und in einer zweiten Stufe zur Verflüchtigung der flüchtigen Komponenten eine Temperaturbehandlung erfolgt. Es gelingt jedoch auf diese Weise nicht, hochreine Produkte herzustellen. Denn es erfolgt in der ersten Stufe eine Aufkonzentrierung auf ca. 65 %, in der zweiten Eindampfstufe wird eine Konzentration von 99,8 % erreicht. Eine solche Reinheit entspricht jedoch nicht mehr den heutigen Anforderungen.

Aus US-A-4 383 972, EP-A-0 413 830, US-A-2 941 985 und US-A-4 542 196 sind bereits kautschukfreie Copolymerisate aus Styrol und Acrylnitril bekannt, die aber auch noch nicht die gewünschte extreme Reinheit aufweisen.

Der vorliegenden Erfindung liegt daher die Aufgabe zugrunde, ein Verfahren und eine Vorrichtung zur Herstellung von Copolymerisaten mit niedrigen Monomerrestgehalten zur Verfügung zu stellen, wobei das so hergestellte Produkt eine extreme Reinheit aufweist. Ferner ist erwünscht, dass bei konstruktiv einfachem Aufbau ein guter Durchsatz erzielt wird.

Erhältlich sind nach dem erfindungsgemäßen Verfahren Copolymerisate von ethylenisch ungesättigten Monomeren ("Vinylmonomere"), wie Vinylacetat, Styrol, Alpha-Methylstyrol und Acrylnitril, welche wenig Restmonomere, nämlich kleiner 20, bevorzugt 10 ppm Acrylnitril und kleiner 200, bevorzugt 100 ppm Styrol und kleiner 200, bevorzugt 100 ppm Ethylbenzol enthalten.

Die Bestimmung erfolgt gaschromatografisch mit der Head Space Methode.

Die Erfindung betrifft ein Verfahren zur Herstellung von kautschukfreien Copolymerisaten von ethylenisch ungesättigten Monomeren, ausgewählt aus der Gruppe der Styrole und Vinylcyanide, enthaltend 65 bis 80 Gew.-% Styrol und 20 bis 35 Gew.-% Acrylnitril mit einem niedrigen Monomerrestgehalt, wobei die Aufkonzentrierung zweistufig erfolgt, dadurch gekennzeichnet, dass Lösungen der kautschukfreien Copolymerisate in einer ersten Stufe einer schonenden Aufkonzentrierung durch Energieeintrag bei gleichzeitiger Verdampfung in einem Rohrverdampfer auf Konzentrationen von größer/gleich 99,8 % gebracht und dass ohne Zwischenerhitzung in einer zweiten Stufe weitere Monomere in einem Strangverdampfer entfernt werden.

Vorrichtungstechnisch erfolgt die Lösung der Aufgabe durch einen Rohrverdampfer in der ersten Stufe, einem Strangverdampfer in der zweiten Stufe und Einrichtungen zum Fördern der Produktlösungen.

Erfindungsgemäß werden die oben genannten Copolymerisate von ethylenisch ungesättigten Monomeren eingesetzt.

Insbesondere kommen kautschukfreie Vinylpolymerisate in Frage:

Bevorzugte Vinylpolymerisate (A.1) sind Copolymerisate aus einerseits Styrol, α-Methylstyrol, kernsubstituiertem Styrol oder Mischungen (A.1.1) und andererseits Acrylnitril (A.1.2).

Die Copolymerisate enthalten vorzugsweise 68 bis 77 Gew.-% des Bestandteils A.1.1 und 23 bis 32 Gew.-% des Bestandteils A.1.2.

Die Bekanntesten sind Styrol-Acrylnitril-Copolymerisate, die durch radikalische Polymerisation, insbesonders Lösungs- oder Massepolymerisation hergestellt werden können. Die Copolymerisate A. 1 besitzen vorzugsweise Schmelzvolumenindices von 5 bis 60 cm³/10 min, gemessen bei 220°C und 10 kg Belastung, (ISO 1133), entsprechend Gewichtsmitteln der Molmassenverteilungen Mw von 80 bis 200 kg/mol.

Die Erfindung wird nachfolgend anhand einer lediglich ein bevorzugtes Ausführungsbeispiel darstellenden Zeichnung näher erläutert. In der Zeichnung zeigen
- Fig. 1: einen schematischen Aufbau der erfindungsgemäßen Vorrichtung und
- Fig. 2: eine bevorzugte Ausführung einer konisch abgesetzten Bohrung in der Rohrwandung des Rohrverteilers.

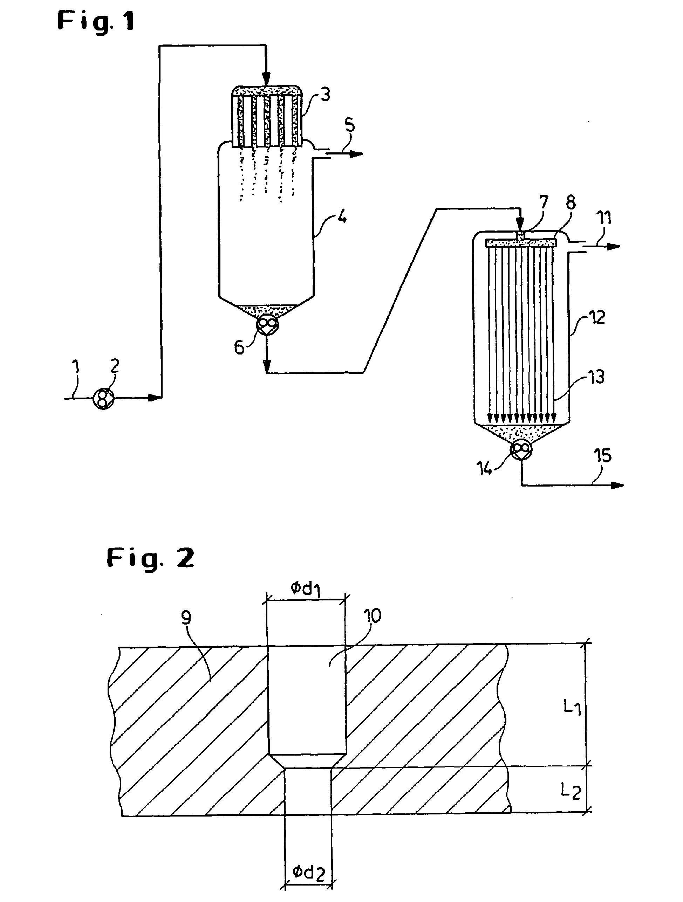

Wie aus Fig. 1 ersichtlich, wird eine Lösung 1 eines Copolymerisats von Acrylnitril und Styrol in einem Gemisch von Ethylbenzol und Styrol mit einer Konzentration des Polymers von 60 bis 70 %, welches durch Polymerisation in einem Gemisch aus und Styrol und Acrylnitril und gegebenenfalls einem zusätzlichen Lösungsmittel wie Ethylbenzol, Toluol oder Methylethylketon gewonnen wurde, bei einer Temperatur von 140 bis 165°C mittels einer Zahnradpumpe 2 einem senkrecht stehenden Rohrbündelapparat von oben zugeführt.

Das darin enthaltene Rohrbündel 3 ist vorzugsweise auf einen Abscheidebehälter oder Zyklon 4 aufgesetzt, in dem die Trennung der in den Rohren entstehenden Gasphase von der Polymerphase erfolgt. Für die Isolierung des Polymers bis zu sehr niedrigen Monomergehalten von kleiner als 0,2 %, ist es notwendig, den Druck im Abscheider mittels eines Vakuumsystems auf einen Druck von 50 bis 100 mbar, bevorzugt 20 bis 30 mbar, abzusenken. Im Abscheidebehälter 4 sammelt sich die weitgehend entmonomerisierte Polymerphase im Sumpf. Die Gase werden bevorzugt seitlich oder über eine Kopfleitung 5 abgezogen und der Polymerisation wieder zugeführt.

Für die erfindungsgemäß schonend erfolgende Aufkonzentrierung durch Energieeintrag bei gleichzeitiger Verdampfung wird der Rohrbündelverdampfer mit flüssigen oder dampfförmigen Wärmeträgern beheizt. Die Beheizung erfolgt so, dass die Temperatur im Ablauf 165 bis 240°C, bevorzugt 220°C, beträgt. Die Mantelheizung weist Temperaturen von 190 bis 240°C, bevorzugt 220 bis 230°C, auf.

Eine Besonderheit des erfindungsgemäßen Verfahrens besteht darin, dass innerhalb der Rohre keine Blenden oder Verengungen vorgesehen sind, d.h. der Druckverlust der Strömung in den Rohren ist gering. Er beträgt in Abhängigkeit von Beheizungstemperatur, Viskosität des Polymers, Durchsatzes und Rohrgeometrie weniger als 10 bar, bevorzugt weniger als 5 bar (abs).

Durch den geringen Druck im Rohr beginnt bei genügend hoher Beheizungstemperatur das Eindampfen der Lösung bereits innerhalb der Rohre, bevorzugt kurz nach Eintritt der Lösung in die Rohre. Durch die einsetzende Verdampfung entsteht ein voluminöser Schaum, wodurch die Verweilzeit in den Rohren im Vergleich zur einphasigen Strömung stark verringert wird. Überraschenderweise wird durch die Zweiphasigkeit der Wärmeübergang im Vergleich zur Einphasigkeit verbessert, wodurch gute Eindampfergebnisse bei gleichzeitig geringen Beheizungstemperaturen realisierbar sind. Durch die beim Verdampfen einsetzende Siedekühlung wird im Vergleich zur Flashverdampfung eine Überhitzung des Produktes vermieden. Dadurch, dass die Zweiphasigkeit innerhalb der Rohre mit ihrem positiven Einfluss auf Wärmeübergang, Verweilzeit und Produkttemperatur (Siedekühlung) auftritt, ist eine schonende Eindampfung, d.h. mit geringer Temperaturbelastung und kurzen Verweilzeiten gewährleistet.

Der Durchsatz Polymer pro Rohr beträgt 1 bis 10 kg/h bevorzugt, 2 bis 5 kg/h. Die Rohrlänge beträgt vorzugsweise 1 bis 2,5 m, der Rohrdurchmesser bevorzugt 8 bis 23 mm. Zur Verbesserung des Wärmeübergangs können auch statische Mischer, (z. B. Typ Kenics) in den Rohren vorgesehen sein. Die Mischer haben zusätzlich den Vorteil, dass innerhalb der Rohre eine Durchmischung stattfindet und damit eine Überhitzung wandnaher Schichten vermieden wird.

Zur gleichmäßigen Verteilung des in das Rohrbündel 3 eintretenden Stoffstroms auf die einzelnen Rohre in dem beschriebenen Rohrbündelapparat, kann optional eine Verteilerplatte (Lochplatte), die in dem Raum vor den Rohren einen erhöhten Druckverlust bewirkt, oberhalb des Rohreintritts montiert werden.

Der Restgehalt an Monomeren im Produkt beträgt bereits nach dem Passieren des Rohrbündelverdampfers erfindungsgemäß 1000 bis 2000 ppm.

Das auf diese Restgehalte isolierte Produkt wird im Sumpf des Abscheiderbehälters 4 gesammelt und mit einer Zahnrad- oder Schneckenpumpe 6 aus dem Abscheider ausgetragen und zum folgenden Strangverdampfer gefördert.

In diesem wird in einer besonderen Ausführungsart das Produkt von einem Zentralrohr 7 über einen Rohrverteiler 8 auf eine Vielzahl einzelner Rohre 9 verteilt, welche in einer besonderen Ausführungsform konisch verlaufende oder, wie in Fig. 2 dargestellt, abschnittsweise konisch verlaufende Bohrungen 10 aufweisen. Bevorzugt betragen der Durchmesser der d₁ der oberen Bohrung 5 bis 10 mm und seine Länge b₁ 5 bis 30 mm und der Durchmesser d₂ der unteren Bohrung 0,5 bis 5 mm bei einer Abschnittslänge L₂ von 2 bis 10 mm.

Zur Gewährleistung einer gleichmäßigen Verteilung der Lösung über die Rohre werden diese beheizt. Der Rohrverteiler 8 befindet sich am oberen Ende eines auf einen Absolutdruck von 0,5 bis 10 bevorzugt 0,5 bis 2 mbar über einen Brüdenabzug 11 evakuierten senkrecht stehenden, mantelbeheizten Behälters 12 mit einer Höhe von 2 bis 10 m, bevorzugt 4 bis 5 m. Zwischen dem Boden des Behälters und den Löchern des Rohrverteilers 8 bilden sich dünne, stabile Polymerfäden 13 aus. Das Polymer entgast auf dem Weg zum Behälterboden bei einer durchschnittliche Verweilzeit von weniger als 15 sec.

Erfindungsgemäß werden pro Loch mit einem Durchmesser von 1 bis 4 mm, bevorzugt von 2 bis 3 mm, eine Produktmenge von bevorzugt 100 bis 200 g/h durchgesetzt. Das Produkt sammelt sich im vorzugsweise konischen Sumpf des Behälters 12, es wird mit einer Zahnrad- oder Schneckenpumpe 14 zu einer Granulierung oder zur Weiterverarbeitung als Schmelze 15 gefördert. Die Restgehalte an Monomeren betragen nach diesem Entgasungsschritt weniger als 100 ppm Styrol, weniger als 100 ppm Ethylbenzol und weniger als 10 ppm Acrylnitril.

### Beispiel

Eine durch radikalische Massepolymerisation hergestellte SAN Lösung einer Zusammensetzung von 65 Gew.-% SAN, 18 Gew.-% Styrol und 17 Gew.-% Ethylbenzol wurden in einem auf 230°C beheizten Rohrbündelapparat mit 700 Rohren eingedampft. Die Temperatur der Lösung am Eintritt betrug 165°C, der Durchsatz SAN/Rohr 1,5 kg/h. Die Rohrlänge betrug 1 m, der Innendurchmesser der Rohre 23 mm. Innerhalb der Rohre waren Statikmischer vom Typ Kenics eingebaut. Der Druck im auf das Rohrbündel folgenden Abscheider betrug 55 mbar.

Die Höhe des Strangverdampfers betrug 4 m, der Durchsatz SAN pro Loch 105 g/h (10 000 Löcher). Der Druck im Abscheider wurde bei 3 mbar gehalten. Der Rohrverdampfer incl. Abscheider und der Strangverdampfer wurden einheitlich mit 230°C beheizt. Die erzielten Restgehalte nach dem Strangverdampfer betrugen: 5 ppm Acrylnitril, 50 ppm Etylbenzol und 70 ppm Styrol. Der Druckverlust über die Rohre des Rohrbündelapparates betrug 2 bar. Der Acrylnitrilgehalt des Polymers betrug 28 %, der Meltindex 54 cm³/10 min bei 220°C.

## Patentansprüche

1. Verfahren zur Herstellung von kautschukfreien Copolymerisaten von ethylenisch ungesättigten Monomeren, ausgewählt aus der Gruppe der Styrole und Vinylcyanide, enthaltend 65 bis 80 Gew.-% Styrol und 20 bis 35 Gew.-% Acrylnitril mit einem niedrigen Monomerrestgehalt, wobei die Aufkonzentrierung zweistufig erfolgt, **dadurch gekennzeichnet, dass** Lösungen der kautschukfreien Copolymerisate in einer ersten Stufe einer schonenden Aufkonzentrierung durch Energieeintrag bei gleichzeitiger Verdampfung in einem Rohrverdampfer auf Konzentrationen von größer/gleich 99,8 % gebracht und dass ohne Zwischenerhitzung in einer zweiten Stufe weitere Monomere in einem Strangverdampfer entfernt werden.

2. Verfahren nach Anspruch 1, **dadurch gekennzeichnet, dass** die Beheizung in der ersten Stufe so erfolgt, dass die Ablauftemperatur 165 bis 240°C beträgt.

3. Verfahren nach einem der Ansprüche 1 oder 2, **dadurch gekennzeichnet, dass** das Vakuum in der ersten Stufe 20 bis 50 mbar beträgt.

4. Verfahren nach einem der Ansprüche 1 bis 3, **dadurch gekennzeichnet, dass** der Durchsatz durch die Rohre in der ersten Stufe 1 bis 10 kg/h beträgt.

5. Verfahren nach einem der Ansprüche 1 bis 4,**dadurch gekennzeichnet, dass** im Strangverdampfer ein Vakuum von 0,5 bis 10 mbar herrscht.

6. Vorrichtung zur Herstellung von Copolymerisaten mit niedrigem Monomerrestgehalt zur Durchführung eines Verfahrens nach einem der Ansprüche 1 bis 5, **gekennzeichnet durch** einen Rohrverdampfer in der ersten Stufe, einen Strangverdampfer in der zweiten Stufe und Einrichtungen zum Fördern der Produktlösungen.

7. Vorrichtung nach Anspruch 6, **dadurch gekennzeichnet, dass** die Länge der Rohre in der ersten Stufe 1 bis 2,5 m und der Innendurchmesser 8 bis 23 mm beträgt.

8. Vorrichtung nach Anspruch 6 oder 7, **dadurch gekennzeichnet, dass** in den Rohren statische Mischelemente vorgesehen sind.

9. Vorrichtung nach einem der Ansprüche 6 bis 8, **dadurch gekennzeichnet, dass** das Produkt im Strangverdampfer über einen Rohrverteiler auf Rohre mit Bohrungen mit einem Durchmesser von 1 bis 4 mm aufgebracht wird und sich diese Rohre in einem senkrecht stehenden Apparat mit einer Höhe von 2 bis 10 m befinden.

10. Vorrichtung nach Anspruch 9, **dadurch gekennzeichnet, dass** die Bohrungen sich konisch verjüngen.

11. Vorrichtung nach Anspruch 9 oder 10, **dadurch gekennzeichnet, dass** der Durchsatz pro Loch 100 bis 200 g/h beträgt.

12. Vorrichtung nach einem der Ansprüche 9 bis 11, **dadurch gekennzeichnet, dass** die Rohre beheizt werden können.

## Claims

1. Process for the preparation of rubber-free copolymers of ethylenically unsaturated monomers selected from the group of styrenes and vinyl cyanides containing 65 to 80 wt. % of styrene and 20 to 35 wt. % of acrylonitrile having a low residual monomer content, the concentration taking place in two steps, **characterized in that** solutions of the rubber-free copolymers are brought to concentrations of greater than/equal to 99.8% in a first step of gentle concentration by introducing energy with simultaneous evaporation in a tube evaporator and **in that** further monomers are removed in a second step without intermediate heating in an extrusion-type evaporator.

2. Process according to Claim 1, **characterized in that** the heating in the first step takes place in such a way that the outlet temperature is 165 to 240°C.

3. Process according to either of Claims 1 and 2, **characterized in that** the vacuum in the first step is 20 to 50 mbar.

4. Process according to any one of Claims 1 to 3, **characterized in that** the throughput through the tubes in the first step is 1 to 10 kg/h.

5. Process according to any one of Claims 1 to 4, **characterized in that** the vacuum prevailing in the extrusion-type evaporator is 0.5 to 10 mbar.

6. Device for the preparation of copolymers with a low residual monomer content for carrying out a process according to any one of Claims 1 to 5, **characterized by** a tube evaporator in the first step, an extrusion-type evaporator in the second step and equipment for conveying the product solutions.

7. Device according to Claim 6, **characterized in that** the length of the tubes in the first step is 1 to 2.5 m and the internal diameter is 8 to 23 mm.

8. Device according to Claim 6 or 7, **characterized in that** static mixing components are provided in the tubes.

9. Device according to any one of Claims 6 to 8, **characterized in that** the product in the extrusion-type evaporator is applied by way of a tube manifold to tubes with bores with a diameter from 1 to 4 mm, and said tubes are situated in a vertically arranged apparatus with a height from 2 to 10 m.

10. Device according to Claim 9, **characterized in that** the bores taper conically.

11. Device according to Claim 9 or 10, **characterized in that** the throughput per orifice is 100 to 200 g/h.

12. Device according to any one of Claims 9 to 11, **characterized in that** the tubes may be heated.

## Revendications

1. Procédé pour la préparation de copolymères, exempts de caoutchouc, de monomères à insaturation éthylénique choisis dans le groupe des styrènes et des cyanures de vinyle, contenant de 65 à 80 % en poids de styrène et de 20 à 35 % en poids d'acrylonitrile, ayant une faible teneur résiduelle en monomères, la concentration s'effectuant en deux étapes, **caractérisé en ce que** des solutions des copolymères exempts de caoutchouc sont portées à des concentrations de ≥ 99,8 % dans une première étape d'une concentration ménagée, par apport d'énergie avec évaporation simultanée dans un évaporateur tubulaire et **en ce que**, sans chauffage intermédiaire, dans une seconde étape d'autres monomères sont éliminés dans un évaporateur à faisceaux de tubes.

2. Procédé selon la revendication 1, **caractérisé en ce que** le chauffage dans la première étape s'effectue de manière que la température de sortie soit de 165 à 240 °C.

3. Procédé selon la revendication 1 ou 2, **caractérisé en ce que** le vide dans la première étape est de 20 à 50 mbars.

4. Procédé selon l'une quelconque des revendications 1 à 3, **caractérisé en ce que** le débit dans les tubes dans la première étape est de 1 à 10 kg/h.

5. Procédé selon l'une quelconque des revendications 1 à 4, **caractérisé en ce qu'**un vide de 0,5 à 10 mbars règne dans l'évaporateur à faisceaux de tubes.

6. Dispositif pour la préparation de copolymères à faible teneur résiduelle en monomères, pour la mise en oeuvre d'un procédé selon l'une quelconque des revendications 1 à 5, **caractérisé par** un évaporateur tubulaire dans la première étape, un évaporateur à faisceaux de tubes dans la seconde étape et des dispositifs pour le transport des solutions de produit.

7. Dispositif selon la revendication 6, **caractérisé en ce que** la longueur des tubes dans la première étape va de 1 à 2,5 m et le diamètre interne va de 8 à 23 mm.

8. Dispositif selon la revendication 6 ou 7, **caractérisé en ce que** des éléments mélangeurs statiques sont prévus dans les tubes.

9. Dispositif selon l'une quelconque des revendications 6 à 8, **caractérisé en ce que** le produit dans l'évaporateur à faisceaux de tubes est appliqué au moyen d'un manifold sur des tubes à évidements d'un diamètre interne de 1 à 4 mm et ces tubes se trouvent dans un appareil vertical ayant une hauteur de 2 à 10 m.

10. Dispositif selon la revendication 9, **caractérisé en ce que** les évidements sont coniques.

11. Dispositif selon la revendication 9 ou 10, **caractérisé en ce que** le débit par orifice est de 100 à 200 g/h.

12. Dispositif selon l'une quelconque des revendications 9 à 11, **caractérisé en ce que** les tubes peuvent être chauffés.
